**Europäisches Patentamt**

**European Patent Office**

**Office européen des brevets**

(19)

(11) Veröffentlichungsnummer : **0 412 231 B1**

(12)

# EUROPÄISCHE PATENTSCHRIFT

(45) Veröffentlichungstag der Patentschrift :
**26.08.92 Patentblatt 92/35**

(51) Int. Cl.$^5$ : **B65D 43/06**

(21) Anmeldenummer : **90100773.2**

(22) Anmeldetag : **16.01.90**

(54) **Topfförmiges Gefäss, insbesondere Eimer, mit Deckel.**

(30) Priorität : **05.08.89 DE 8909454 U**

(43) Veröffentlichungstag der Anmeldung :
**13.02.91 Patentblatt 91/07**

(45) Bekanntmachung des Hinweises auf die
Patenterteilung :
**26.08.92 Patentblatt 92/35**

(84) Benannte Vertragsstaaten :
**AT BE CH DE FR LI LU NL**

(56) Entgegenhaltungen :
**EP-A- 0 245 894**
**EP-A- 0 326 068**
**WO-A-88/03901**
**GB-A- 2 198 422**
**LU-A- 83 681**

(73) Patentinhaber : **SAIER GmbH & Co.**
**Reutiner Strasse 7**
**W-7297 Alpirsbach-Peterzell (DE)**

(72) Erfinder : **Saier, Ulrich, Dipl.-Ing.(FH)**
**Täleweg 1**
**W-7297 Alpirsbach 1 - Peterzell (DE)**
Erfinder : **Mönch, Dieter, Dr.-Ing.**
**Oberer Hummelberg 8**
**W-7297 Alpirsbach 1 (DE)**
Erfinder : **Binder, Hans**
**Bergstrasse 6**
**W-7297 Alpirsbach 1 (DE)**

(74) Vertreter : **Schmid, Berthold, Dipl.-Ing. et al**
**Kohler Schmid + Partner Patentanwälte**
**Ruppmannstrasse 27**
**W-7000 Stuttgart 80 (DE)**

## Beschreibung

Die vorliegende Erfindung bezieht sich auf ein topfförmiges Gefäß mit einem Deckel, insbesondere einen Eimer od. dgl., das einen äußeren Befestigungsrand aufweist, dessen freie Kante etwa entgegen dem freien Gefäßrand gerichtet und mit dem zugehörigen Deckel rastend verbindbar ist, wobei eine nach innen ragende, sich an eine erste Dünnstelle des umlaufenden Deckelrandes anschließende Leiste die freie Kante des Befestigungsrandes von dem Gefäß untergreift, der Deckelrand zur Bildung eines aus einer abwärts gerichteten Schließstellung nach oben in eine Freigebestellung umklappbaren Umschlagrandes über die zuvor erwähnte Leiste hinaus verlängert ist und der Außendurchmesser des Umschlagrandes in seiner nach unten gerichteten Schließstellung größer als der Außendurchmesser des Deckelrandes ist.

Bei einer bekannten Ausführung ist nicht nur das topfförmige Gefäß bzw. der Eimer, sondern auch der Deckel aus Kunststoff hergestellt. Man benutzt derartige Gefäße beispielsweise in der chemischen Industrie, der Farbenindustrie oder auch in der Nahrungsmittelindustrie, beispielsweise zum Verpacken pastöser Massen wie Senf, Ketchup und dgl.. Der Deckel muß dabei während des Transports dicht schließen. Außerdem ist es erwünscht, daß man nach einer Teilentleerung des Gefäßes den Deckel auch wieder abdichtend auf den Rand des Gefäßes aufsetzen kann. Trotzdem soll dieser Deckel anschließend vergleichsweise leicht abnehm- und aufsetzbar sein. Beim ersten Öffnen des Gefäßes wird der durchgehend umlaufende Umschlagrand aus seiner nach unten weisenden Schließstellung nach oben in eine Freigabestellung umgekrempelt, in der seine freie Unter kante nunmehr nach oben zeigt. Dieses Umkrempeln ist dabei infolge der beispielsweise nur 0,2 mm bis 0,3 mm dicken Dünnstelle des umlaufenden Deckelrands ohne weiteres möglich. In der abwärts gerichteten Schließstellung des Umschlagrandes dagegen untergreift die an diesem angeformte und radial nach innen vorstehende Leiste den normalerweise schräg nach außen und unten ragenden, insbesondere im querschnitt etwa bogenförmigen und versteiften Gefäßrand. Aufgrund von Eigenspannungen im Deckelrand wird der letztere dabei in etwa radialer Richtung von außen an diesen Befestigungsrand des Gefäßes angepreßt. Infolgedessen ist ein Aufliegen der Deckelplatte des im wesentlichen ebenfalls etwa topfförmigen Deckels auf dem freien Gefäßrand nicht erforderlich. Durch dieses radiaiale Anpressen des umlaufenden Deckelrands an den Befestigungsrand des Gefäßes wird das letztere ausreichend dicht verschlossen.

Wenn der Deckel nach einer Teilentnahme des Gefäßinhalts wieder fest auf den Gefäßrand aufgesetzt werden soll, so muß man zunächst den in seine Freigabestellung hochgekrempelten Umschlagrand wieder in seine abwärts gerichtete Schließstellung zurückschwenken und sodann den Deckel kräftig auf den Gefäßrand aufdrücken. Dieses aber ist bei mehreren, kurz aufeinanderfolgenden Teilentleerungen ein vergleichsweise lästiger und auch zeitaufwendiger Arbeitsgang.

In der luxemburgischen Patentschrift LU-A-83 681 ist ferner schon ein Gefäß der in Rede stehenden Art beschrieben worden, bei dem der Außendurchmesser des Umschlagrandes in seiner nach unten gerichteten Schließstellung derart größer als der Außendurchmesser des Deckelrandes ist, daß sich dieser Umschlagrand leicht erfassen läßt und sicher nach oben umgeschlagen werden kann.

Die Aufgabe der vorliegenden Erfindung besteht nun darin, ein topfförmiges Gefäß mit Deckel der eingangs beschriebenen Art so weiterzubilden, daß sich dieses einfach und mühelos beliebig oft öffnen und wieder verschließen läßt.

Zur Lösung dieser Aufgabe wird erfindungsgemäß vorgeschlagen, daß zwischen der die freie Kante des Befestigungsrandes untergreifenden Leiste des Deckelrandes und dem Umschlagrand eine zweite umlaufende Dünnstelle vorgesehen ist.

Wird bei dieser erfindungsgemäß ausgebildeten Gestaltung der zunächst seine Schließstellung einnehmende Umschlagrand nach oben in eine Freigabestellung umgeschlagen, so legt der Umschlagerand zunächst einen Leerweg von etwa 90° bis 160° zurück, bis er sich anschließend in dem Bereich der ersten umlaufenden Dünnstelle des Deckelrandes an dessen Außenmantel abstützt. Dieser ringförmige Teil des Außenmantels von dem Deckelrand bildet dabei ein Widerlager, das bei einem weiteren Herumschwenken des Umschlagrandes gegen den Deckelrand unter Überwindung einer Totpunktstellung ein Wegschwenken der an dem Deckelrand angeformten Leiste nach außen und damit ebenfalls in eine Freigabestellung erlaubt, in der diese Leiste aus dem Bereich des Befestigungsrandes von dem Gefäß teilweise heraustritt und so nach Überwinden eines noch verbleibenden geringen Widerstandes ein Abheben des Deckels ermöglicht.

Während des Transportes dieses erfindungsgemäßen Gefäßes ist der zuvor erwähnte Umschlagrand nach unten in seine Schließstellung umgeklappt. Greift nun während des Transportes einer Vielzahl dieser topfförmigen Gefälle der Deckelrand eines benachbarten Gefäßes unter diesen Umschlagrand und hebt denselben dabei etwas an, so wird dieser Umschlagrand nach oben geschwenkt. Da diese Schwenkbewegung des Umschlagrandes jedoch auf dessen zuvor erwähnten Leerweg beschränkt ist, verbleibt die an dem Deckelrand angeformte, radial nach innen vorstehende Leiste nach wie vor in ihrer Schließstellung, so daß sich der Deckel nicht abheben kann. Dieses ist vor allem ein besonderer Vorteil bei der Benutzung von Handhabungsgeräten, die unter den Deckelrand greifen, um den Eimer und den Deckel zu halten.

Weiterhin ist es in diesem Zusammenhang zweckmäßig, wenn die sich zwischen der Leiste des Deckelrandes und dem Umschlagrand befindliche Dünnstelle ähnlich einem Steg od. dgl. ausgebildet ist.

Eine weitere Variante besteht auch noch darin, daß die Stärke der ersten, zwischen dem Deckelrand und der radial nach innen vorstehenden Leiste befindlichen Dünnseite in deren Umfangsrichtung unterschiedlich ist. Durch diese Maßnahme ist es möglich, die Elastizität dieser als Gelenk wirkenden Dünnstelle in deren Umfangsrichtung völlig unterschiedlich zu wählen.

Weitere Einzelheiten der vorliegenden Erfindung ergeben sich aus der folgenden Beschreibung einer auf der Zeichnung dargestellten beispielsweisen Ausführungsform sowie den sich hieran anschliessenden Ansprüchen.

Es zeigen:

Fig. 1 den teilweisen Querschnitt des erfindungsgemäßen Gefäßes mit dem aufgesetztem Deckel in dessen Schließstellung,

Fig. 2 eine der Fig. 1 entsprechende Schnittdarstellung, bei der der Umschlagrand teilweise nach oben umgekrempelt ist,

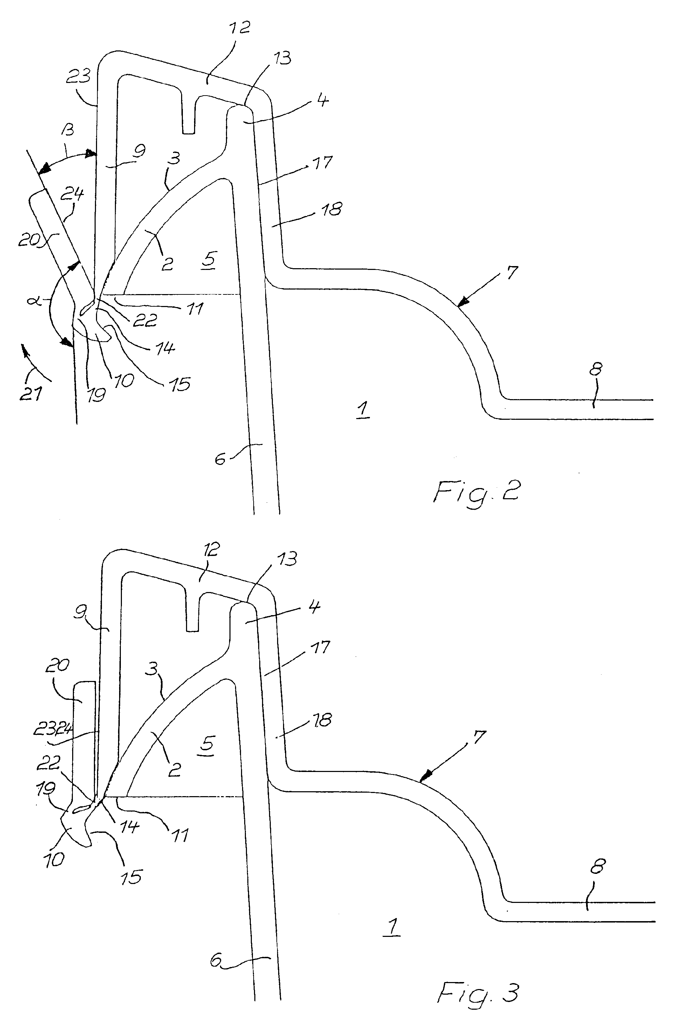

Fig. 3 eine der Fig. 2 entsprechende Darstellung, in der der Umschlagrand vollständig nach oben umgekrempelt ist und

Fig. 4 einen Schnitt gemäß der Linie 4 - 4.

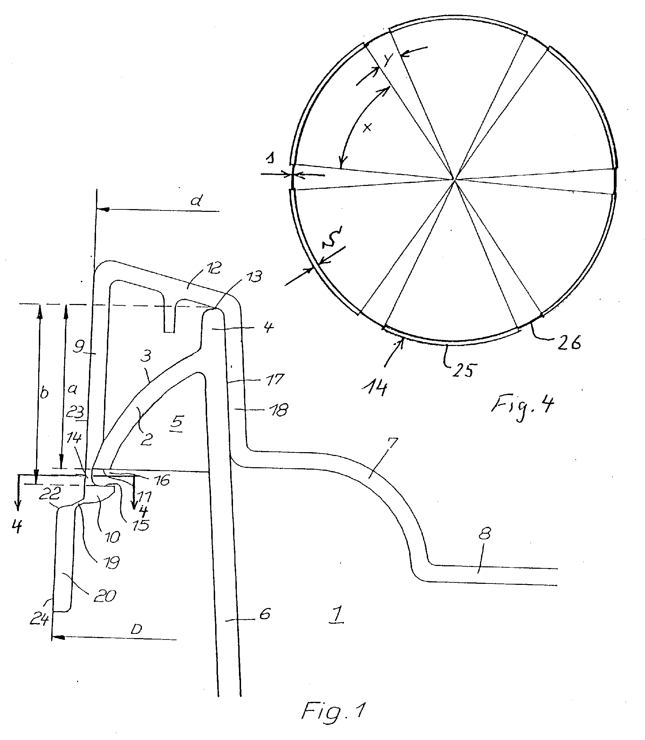

Das erfindungsgemäße Gefäß, beispielsweise ein aus Kunststoff gefertigter Eimer, weist in bekannter Weise in seinem oberen Bereich einen Befestigungsrand 2 auf, der bei diesem Ausführungsbeispiel einen bogenförmigen querschnitt hat und ,bezogen auf den Boden, auf dem das Gefäß 1 steht, sich nach außen und unten erstreckt. Dabei zeigt die konvexe Außenfläche 3 des Befestigungsrandes 2 gemäß der Fig. 1 nach oben außen. Der eigentliche Gefäßrand 4 steht dabei geringfügig über diesem Befestigungsrand 2 nach oben hin vor. Dabei kann dieser Befestigungsrand 2 durch radiale Rippen 5 gegen die Gefäßwandung 6 hin abgestützt sein. Auf das Gefäß 1 ist ein Deckel 7 aufgesetzt, der ebenso wie das Gefäß 1 aus Kunststoff besteht. Wesentlicche Elemente dieses Deckels 7 sind dabei die Deckelplatte 8 und der umlaufende Deckelrand 9, wobei dieser Deckel 7 grob gesehen, eine topfartige Gestalt aufweist. In der in der Fig. 1 dargestellten Verschlußlage dieses Deckels 7 untergreift dabei eine radial nach innen vorstehende Leiste 10 die untere freie Kante 11 des Befestigungsrandes 2 und verhindert so ein unerwünschtes Abheben dieses Deckels 7 von dem Gefäß 1. Der Deckel 7 sitzt dabei mit seinem die topfartige Deckelplatte 8 mit dem Deckelrand 9 verbindenden Steg 12 auf der Oberkante 13 des Gefäßrandes 4 auf. Der Abstand zwischen dieser Oberkante 13 des Gefäßrandes 4 und der Unterkante 11 des Befestigungsrandes 2 ist dabei mit a bezeichnet.

Wie insbesondere aus der Fig. 1 ersichtlich ist, so ist das Profil der die freie Kante 11 des Befestigungsrandes 2 untergreifenden Leiste 10 des Deckelrandes 9 ähnlich einer Nase ausgebildet, deren Plane nach oben weisende Anschlagfläche 15 in der Schließstellung der Leiste 10 der Anschlagfläche 11 des Befestigungsrandes 2 gegenübersteht.

Im Bereich der Unterkante 11 dieses Befestigungsrandes 2 ist in den Deckelrand 9 eine erste, das Material schwächende Dünnstelle 14 eingeformt, in die in der in der Fig. 1 gezeigten Schließstellung des Deckels 7 der Befestigungsrand 2 teilweise hineinragt. Anschließend an diese erste Dünnstelle 14 ist an dem Deckelrand 9 die ringförmige Leiste 10 angeformt, die in den Bereich des Befestigungsrandes 2 vorsteht. Da der Abstand b zwischen der Oberkante 15 dieser Leiste 10 und der Oberkante 13 des Gefäßrandes 4 größer als das zuvor bereits erwähnte Maß a ist, befindet sich zwischen der Unterkante 11 des Befestigungsrandes 2 und der Oberkante 15 dieser Leiste 10 ein ringförmiger Zwischenraum 16. Die Abdichtung zwischen der Gefäßwandung 6 und dem Deckel 7 erfolgt dabei ausschließlich in dem dem Befestigungsrand 2 benachbarten Bereich 17 des Deckelkragens 18.

Wie weiter aus dieser Fig. 1 ersichtlich ist, so ist an der Leiste 10 mittels eines Steges 19 ein mit 20 bezeichneter Umschlagrand angeformt, dessen Außendurchmesser D größer ist als der Außendurchmesser d des Deckelrandes 9.

Soll diese in der Fig. 1 seine Schließstellung einnehmender Dekkel 7 nun von dem Gefäßrand 4 abgehoben werden, so ist der Umschlagrand 20 in der in der der Fig. 2 gezeigten Weise in Richtung des Pfeiles 21 um einen Winkel = etwa 150 ° nach oben in die in dieser Fig. 2 dargestellte Zwischenstellung umzukrempeln, wobei eine Totpunktlage zu überwinden ist. In dieser Zwischenstellung schlägt dieser Umschlagrand 20 mit seiner bisher nach oben und außen weisenden Kante 22 an den benachbarten Außenmantel 23 des Deckelrandes 9 an. Diese Schwenkbewegung des Umschlagrandes 20 bewirkt dabei gleichzeitig auch ein Wegschwenken der sich bisher in ihrer Schließstellung befindlichen Leiste 10 in die in der Fig. 2 dargestellte Lage, in der diese Leiste 10 jedoch noch teilweise in den Bereich des Befestigungsrandes 2 hineinragt und so den Deckel 7 immer noch gegen ein unerwünschtes Lösen von dem Gefäßrand 4 sichert.

Um nun den Deckel 7 vollständig von dem Gefäß 1 abheben zu können, ist dem Umschlagrand 20 eine weitere Schwenkbewegung um den Winkel = 30° zu erteilen, wobei sich dieser Umschlagrand 20 nun mit seiner Außenseite 24 an den Außenmantel 23 des Deckelrandes 9 anlegt. Bei einer weiteren Schwenkbewegung des Umschlagrandes 20 um die nunmehr die Achse eines Scharnieres bildende Anlagekante 22 führt auch die Leiste 10 die gleiche Schwenkbewegung aus und tritt jetzt aus dem Bereich des Befestigungsrandes 2 heraus, sodaß der Deckel 7 jetzt von dem Gefäßrand 4 abgehoben werden kann. Nach dem Abheben des Deckels 7 wird der Umschlagrand 20 wieder freigegeben, so daß dieser infolge der elastischen Verformung des Materials automatisch in die in der Fig. 2 gezeigte Zwischenstellung zurückkehrt. In dieser Zwischenstellung des Umschlagrandes 20 läßt sich der Deckel 7 wieder leicht auf den Gefäßrand 4 aufsetzen, wobei dann die Leiste 10 über die konische Außenfläche 3 des Befestigungsrandes 2 hinwegrutscht und nach dem Passieren desselben ihre in der Fig. 2 gezeigte leichte Sperrstellung einnimmt, in der sie wiederum in den Bereich des Befestigungsrandes 2 hineinragt und so ein unerwünschtes Lösen des Deckels 7 von dem Gefäß 1 verhindert.

Diese zuvor ausführliche dargestellte Anlenkung des Umschlagrandes 20 mittels des Steges 19 an dem Deckelrand 9 ist auch insofern noch besonders vorteilhaft, als während des Transports dieser Umschlagrand 20 ohne weiteres infolge des Stoßes eines benachbarten Behälters um den Winkel α geschwenkt werden kann, ohne daß hierdurch etwa die in der Fig. 1 gezeigte Sperrstellung der Leiste 10 aufgehoben wird.

Was den Leerweg α des Umschlagrandes 20 betrift, so kann sich dieser gegebenenfalls auch über einen Bereich von etwa 90° bis 160° erstrecken, wobei der Arbeitsweg β dann den entsprechenden Bereich von etwa 0° bis 90° umfaßt.

Eine weitere Variante zeigt die Fig. 4, in der die erste ein Gelenk bildende Dünnstelle 14 im Querschnitt dargestellt ist, wobei diese dann abwechselnd in sechs Teildünnstellen 25 und sechs Teildünnstellen 26 unterteilt ist. Die Teildünnstellen 25 erstrecken sich dabei jeweils über einen Winkel x von 50° und weisen eine Stärke S auf. Die anderen Teildünnstellen 26 sind jeweils zwischen Teildünnstellen 25 angeordnet, erstrecken sich nur über einen Winkel y von 10° und weisen eine wesentlich geringere Stärke s auf. Durch diese unterschiedliche Bemessung sowohl der Wandstärken S und s als auch der Winkel x und y ist es möglich, die Elastizität dieser ersten, zwischen dem Deckelrand 9 und der Klemmleiste 10 befindlichen Dünnstelle 14 völlig beliebig zu wählen und den jeweiligen Gegebenheiten anzupassen.

## Patentansprüche

1. Topfförmiges Gefäß (1) mit einem Deckel (7), insbesondere ein Eimer od.dgl., das einen äußeren Befestigungsrand (2) aufweist, dessen freie Kante (11) etwa entgegen dem freien Gefäßrand (4) gerichtet und mit dem zugehörigen Deckel (7) rastend verbindbar ist, wobei eine nach innen ragende, sich an eine erste Dünnstelle (14) des umlaufenden Deckelrandes (9) anschließende Leiste (10) die freie Kante (11) des Befestigungsrandes (2) von dem Gefäß (1) untergreift, der Deckelrand (9) zur Bildung eines aus einer abwärts gerichteten Schließstellung nach oben in eine Freigabestellung umklappbaren Umschlagrandes (20) über die zuvor erwähnte Leiste (10) hinaus verlängert und der Außendurchmesser (D) des Umschlagrandes (20) in seiner nach unten gerichteter Schließstellung größer als der Außendurchmesser (d) des Deckelrandes (9) ist, dadurch gekennzeichnet, daß zwischen der die freie Kante (11) des Befestigungsrandes (2) untergreifenden Leiste (10) des Deckelrandes (9) und dem Umschlagrand (20) eine zweite umlaufende Dünnstelle (19) vorgesehen ist.

2. Gefäß nach Anspruch 1, dadurch gekennzeichnet, daß die zweite umlaufende Dünnstelle ähnlich einem Steg (19) od. dgl. ausgebildet ist.

3. Gefäß nach Anspruch 1 und/oder 2, dadurch gekennzeichnet, daß sich der Umschlagrand (20) in seiner nach oben umgeschlagenen Freigabestellung im Bereich der ersten umlaufenden Dünnstelle (14) des Deckelrandes (9) an dessen Außenmantel (23) abstützt.

4. Gefäß nach einem oder mehreren der Ansprüche 1 bis 3, dadurch gekennzeichnet, daß der Umschlagrand (20) beim Umklappen (21) aus seiner abwärts gerichteten Schließstellung in seine nach oben weisende Freigabestellung zunächst einen Leerweg (α) und anschließend nach seiner Anlage an dem Außenmantel (23) des Deckelrandes (9) einen Arbeitsweg (β) passiert.

5. Gefäß nach Anspruch 4, dadurch gekennzeichnet, daß sich der Leerweg (α) des Umschlagrandes (20) vorzugsweise über einen Bereich von etwa 90° bis 160° und der Arbeitsweg (β) über einen Bereich von etwa 0° bis 90° erstrecken.

6.  Gefäß nach einem oder mehreren der Ansprüche 1 bis 5, dadurch gekennzeichnet, daß das Profil der die freie Kante (11) des Befestigungsrandes (2) untergreifenden Leiste (10) des Deckelrandes (9) ähnlich einer Nase ausgebildet ist, deren plane nach oben weisende Anschlagfläche (15) in der Schließstellung der Leiste (10) der Anschlagfläche (11) des Befestigungsrandes (2) gegenübersteht.

7.  Gefäß nach einem oder mehreren der Ansprüche 1 bis 6, dadurch gekennzeichnet, daß die Stärke (S, s) der ersten, zwischen dem Deckelrand (9) und der Leiste (10) befindlichen Dünnstelle (14) in deren Umfangsrichtung unterschiedlich ist.

8.  Gefäß nach Anspruch 7, dadurch gekennzeichnet, daß die Dünnstelle (14) längs unterschiedlicher Winkel (x, y) unterschiedliche Stärken (S, s) aufweist.

9.  Gefäß nach Anspruch 7 und/oder 8, dadurch gekennzeichnet, daß die Dünnstelle (14) in sechs, eine größere Stärke (S) aufweisende Teildünnstellen (25) und sechs, zwischen diesen befindliche, eine geringere Stärke (s) aufweisende Teildünnstellen (26) unterteilt ist.

10. Gefäß nach Anpsurch 9, dadurch gekennzeichnet, daß sich die eine größere Stärke (S) aufweisenden Teildünnstellen (25) jeweils über einen Winkel (x) von etwa 30° bis 50° und die eine geringere Stärke (s) aufweisenden Teildünnstellen (26) sich jeweils über einen Winkel (y) von etwa 10° bis 30° erstrecken.

## Claims

1.  A pot-shaped vessel (1) with a lid (7), particularly a bucket or the like, having an outer fixing rim (2), the free edge (11) of which is directed substantially away from the free edge (4) of the vessel and is adapted to be connected to the associated lid (7) by catch-type engagement, an inwardly projecting strip (10) adjacent a first thinned portion (14) on the encircling lid rim (7) engaging under the free edge (11) of the fixing rim (2) of the vessel (1), wherein, for forming a fold-over edge (20) which can be folded out of a downwardly directed position of closure upwardly into an opening position, the lid rim (9) is extended beyond the previously mentioned strip (10) and the outside diameter (D) of the fold-over edge (20) is greater in its downwardly directed position of closure than the outside diameter (d) of the lid rim (9), characterised in that between the strip (10) on the lid rim (9) and which engages under the free edge (11) of the fixing rim (2) and the turned-over edge (20) there is a second encircling thinned portion (19).

2.  A vessel according to claim 1, characterised in that the second encircling thinned portion is constructed similarly to a web (19) or the like.

3.  A vessel according to claim 1 and/or 2, characterised in that the turned-over edge (20), when in its upwardly turned back open position is, in the region of the first encircling thinned portion (14) of the lid rim (9) braced against the outer surface (23) thereof.

4.  A vessel according to one or more of claims 1 to 3, characterised in that upon being folded over (21) out of its downwardly directed position of closure into its upwardly directed open position, the turned-over edge (20) initially passes through an idle path ($\alpha$) and then, after it has come to bear on the outer surface (23) of the lid rim (9), it passes through a working path ($\beta$).

5.  A vessel according to claim 4, characterised in that the idle path ($\alpha$) of the turned-over edge (20) preferably extends over a range from about 90° to 160° while the working path ($\beta$) extends over a range from about 0° to 90°.

6.  A vessel according to one or more of claims 1 to 5, characterised in that the profile of the strip (10) on the lid rim (9) which engages under the free edge (11) of the fixing rim (2) is constructed similarly to a nose of which the flat upwardly directed abutting surface (15) in the closed position of the strip (10) is opposite the abutting surface (11) on the fixing rim (2).

7.  A vessel according to one or more of claims 1 to 6, characterised in that the thickness (S, s) of the first thinned portion (14) disposed between the lid rim (9) and the strip (10) varies in the peripheral direction.

8.  A vessel according to claim 7, characterised in that the thinned portion (11) has varying thicknesses (S, s) extending along different angles (x, y).

9. A vessel according to claim 7 and/or 8, characterised in that the thinned portion (14) is sub-divided into six partial thinned portions (25) having a greater thickness (S) and six partial thinned portions (26) having a lesser thickness (s) and disposed between the portions (25).

10. A vessel according to claim 9, characterised in that the partial thinned portion (25) which has a greater thickness (S) extend in each case over an angle (x) of about 30° to 50°C while the partial thinned portions (26) which have a lesser thickness (s) extend in each case over an angle (y) of about 10° to 30°C.

**Revendications**

1. La présente invention concerne un récipient en forme de pot, à couvercle, et en particulier un seau ou similaire, qui présente une bordure extérieure de renforcement dont le bord libre est dirigé quelque peu en direction du bord libre du récipient, le couvercle associé pouvant lui être relié par crantage, tandis qu'une nervure se raccordant à un premier emplacement étroit de la bordure périphérique du couvercle s'insère sous le bord libre de la bordure de renforcement du récipient, que pour obtenir une bordure de butée périphérique basculable vers le haut dans une position d'ouverture, depuis une position de fermeture dirigée vers le bas, le bord du couvercle est prolongé au-delà de la nervure précédemment mentionnée, et que le diamètre extérieur de la bordure de butée périphérique est en sa position de fermeture dirigée vers le bas plus grande que le diamètre extérieur de la bordure du couvercle, caractérisé en ce qu'entre la nervure ( 10) de la bordure (9) du couvercle accrochant par en dessous le bord libre (11 ) de la bordure (2) de renforcement et la bordure (20) de butée périphérique est prévu un second emplacement périphérique (19) de faible épaisseur.

2. Récipient selon la revendication 1, caractérisé en ce que le second emplacement périphérique de faible épaisseur est réalisé sous une forme ressemblant à une âme (19) ou similaire.

3. Récipient selon la revendication 1 et/ou 2, caractérisé en ce que la bordure (20) de butée périphérique s'appuie dans sa position de libération repoussée vers le haut, au voisinage du premier emplacement périphérique ( 14) de faible épaisseur de la bordure (9) du couvercle, sur l'enveloppe extérieure (23) de ce dernier.

4. Récipient selon l'une ou plusieurs des revendications 1 à 3, caractérisé en ce que la bordure (20) de butée périphérique se déplace d'abord d'un déplacement libre (α) lors de son basculement (21 ) depuis sa position de fermeture dirigée vers le bas jusqu'à sa position de libération dirigée vers le haut, et qu'ensuite la bordure (20) de butée périphérique se déplace d'un angle de travail (β), après sa pose sur l'enveloppe extérieure (23) de la bordure (9) du couvercle.

5. Récipient selon la revendication 4, caractérisé en ce que le déplacement libre (α) de la bordure (20) de butée périphérique s'étend de préférence sur une amplitude d'environ 90° à 160°, et que le déplacement de travail (β) s'étend sur une amplitude d'environ 0° à 90°.

6. Récipient selon l'une ou plusieurs des revendications 1 à 5, caractérisé en ce que le profil de la nervure (10) de la bordure (9) du couvercle, qui s'insère en dessous du bord libre (11) de la bordure (2) de renforcement est réalisé sous une forme ressemblant à celle d'un nez, dont la surface plane (15) de butée tournée vers le haut est située face à la surface (11) de butée de la bordure (2) de fixation en la position de fermeture de la nervure (10).

7. Récipient selon l'une ou plusieurs des revendications 1 à 6, caractérisé en ce que les épaisseurs (S, s) des premiers emplacements 14 de faible épaisseur se trouvant entre la bordure (9) du couvercle et la nervure (10) sont différentes le long du périmètre.

8. Récipient selon la revendication 7, caractérisé en ce que l'emplacement (14) de faible épaisseur présente le long d'angles (X, Y) différents des épaisseurs (S, s) différentes.

9. Récipient selon la revendication 7 et/ou 8, caractérisé en ce que l'emplacement (14) de faible épaisseur est partagé en six emplacements partiels (25) de faible épaisseur présentant une grande épaisseur (S) et six emplacements partiels (26) de faible épaisseur présentant une plus petite épaisseur (s) et situés entre les premiers.

10. Récipient selon la revendication 9, caractérisé en ce que les emplacements partiels (25) de faible épaisseur présentant une grande épaisseur (S) s'étendent chacun sur un angle (X) d'environ 30° à 50°, et que les emplacements partiels (26) de faible épaisseur présentant une plus petite épaisseur (s) s'étendent chacun sur un angle Y d'environ 10 ° à 30 °.

Fig. 4

Fig. 1

*Fig. 2*

*Fig. 3*